(19) Europäisches Patentamt
European Patent Office
Office européen des brevets

(11) **EP 3 042 445 B1**

(12) **EUROPÄISCHE PATENTSCHRIFT**

(45) Veröffentlichungstag und Bekanntmachung des Hinweises auf die Patenterteilung:
**11.11.2020 Patentblatt 2020/46**

(21) Anmeldenummer: **14736411.1**

(22) Anmeldetag: **09.07.2014**

(51) Int Cl.:
***H02M 3/156*** *(2006.01)*

(86) Internationale Anmeldenummer:
**PCT/EP2014/064666**

(87) Internationale Veröffentlichungsnummer:
**WO 2015/032529 (12.03.2015 Gazette 2015/10)**

(54) **SCHALTUNG ZUR TASTVERHÄLTNISBEGRENZUNG BEI EINEM SCHALTREGLER SOWIE VERFAHREN ZUM BETRIEB EINES SCHALTREGLERS**

CIRCUIT FOR LIMITING DUTY RATIO IN A SWITCHED-MODE REGULATOR, AND METHOD FOR OPERATING A SWITCHED-MODE REGULATOR

CIRCUIT PERMETTANT LA LIMITATION DU TAUX D'IMPULSIONS POUR UN RÉGULATEUR À DÉCOUPAGE ET PROCÉDÉ PERMETTANT DE FAIRE FONCTIONNER UN RÉGULATEUR À DÉCOUPAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2013 DE 102013217730**

(43) Veröffentlichungstag der Anmeldung:
**13.07.2016 Patentblatt 2016/28**

(73) Patentinhaber: **Robert Bosch GmbH 70442 Stuttgart (DE)**

(72) Erfinder: **HERMANN, Carsten 72762 Reutlingen (DE)**

(56) Entgegenhaltungen:
**US-A- 5 627 460**

**Beschreibung**

Die vorliegende Erfindung betrifft eine Schaltung zur Tastverhältnisbegrenzung bei einem Schaltregler, ein Verfahren zum Betrieb eines Schaltreglers sowie ein Kraftfahrzeug mit einer Schaltung zur Tastverhältnisbegrenzung bei einem Schaltregler.

Stand der Technik

Signale, wie zum Beispiel Taktsignale oder PWM (pulsweitenmodulierte) Signale, weisen ein Tastverhältnis, das auch Tastgrad genannt wird, auf. Das Tastverhältnis definiert das Verhältnis von Impulsdauer, das heißt aktivem Signalteil, zu der Periodendauer des Signals. Der nicht aktive Signalteil kann auch als Ausschaltzeit bezeichnet werden.
Wird ein Schaltregler als Abwärtswandler betrieben, so stellt sich ein Tastverhältnis ein, das idealisiert dem Verhältnis von Ausgangs- zu Eingangsspannung entspricht. Wird zum Beispiel aus einer Eingangsspannung von 14 V eine Ausgangsspannung von 6 V erzeugt, so stellt sich ein Tastverhältnis von circa 43 % ein. Bei einem derartigen Tastverhältnis wäre die Endstufe des Schaltreglers die ersten 43 % einer Taktperiode eingeschaltet und die sich anschließenden 57 % der Taktperiode ausgeschaltet. In der Ausschaltzeit, das heißt, wenn die Endstufe ausgeschaltet ist, wird ein Energiespeicher, zum Beispiel ein Boost-Kondensator, nachgeladen, dessen Ladung in der nächsten Periode wieder zum Einschalten und/oder Halten einer Gate-Spannung der Endstufe benötigt wird.
Wird der Schaltregler nun nahe des Dropbereiches betrieben, das heißt, dass die Eingangsspannung nur geringfügig größer ist als die Ausgangsspannung, stellt sich ein Tastverhältnis ein, das nahe an 100 % heranreicht. Dieser Betriebszustand kann im Auto beispielsweise während des Startvorgangs auftreten. Hier kann die Batteriespannung stark einbrechen.
Wenn der Ladestand des Boost-Kondensators nicht ausreichend hoch ist, kann die Endstufe in der folgenden Taktperiode nicht mehr eingeschaltet werden. Dies führt dann dazu, dass die Ausgangsspannung absinkt und das Tastverhältnis vom Regler auf 100 % eingestellt wird. Solange der Boost-Kondensator jedoch nicht die erforderliche Ladung hat, kann die Endstufe auch bei einem eingestellten Tastverhältnis von 100% nicht mehr eingeschaltet werden. Üblicherweise wird der Boost-Kondensator dann über einen Notladestrompfad wieder aufgeladen. Dieser Mechanismus greift jedoch erst, nachdem die Ausgangsspannung deutlich abgesunken ist und das Tastverhältnis längere Zeit 100 % beträgt und somit auch keine Ladung mehr für Einschaltversuche beziehungsweise vergebliche Einschaltvorgänge aus dem Boost-Kondensator entnommen wurde. Dies führt dann dazu, dass keine Ladung mehr für Einschaltvorgänge aus dem Boost-Kondensator entnommen werden kann. Dieser Effekt macht sich als ungewollter Ripple beziehungsweise als ungewolltes Schwingen der Ausgangsspannung bemerkbar, was den Regelkreis instabil macht.
US 5 627 460 A offenbart einen DC/DC Abwärtswandler mit einer Tastverhältnisbegrenzung für einen high side Treiber.

Offenbarung der Erfindung

Das erfindungsgemäße Verfahren nach Anspruch 1 zum Betrieb eines Schaltreglers mit einer nachgeordneten Schaltung, die von einem Signal des Schaltreglers angesteuert wird, und einem Energiespeicher, wie einem Kondensator oder einem Boost-Kondensator, der bei ausgeschalteter nachgeordneter Schaltung geladen wird, umfasst grundsätzlich, dass das Tastverhältnis des Signals bei einem oberen Grenzwert derart begrenzt wird, dass eine vorbestimmte Ladezeit für den Kondensator zur Verfügung steht.
Das erfindungsgemäße Verfahren hat den Vorteil, dass ein Schaltregler auch nahe der Dropspannung stabil betrieben werden kann, indem das Tastverhältnis des (pulsweitenmodulierten) Signals, wie zum Beispiel einem (pulsweitenmodulierten) PWM-Signal oder einem Rechtecksignal, bei oder durch einen Grenzwert nach oben begrenzt wird. Auf diese Weise wird sichergestellt, dass der Kondensator stets die zum Einschalten und/oder Halten der Gatespannung der nachgeordneten Schaltung, wie zum Beispiel einer Endstufe, erforderliche Ladung zur Verfügung stellen kann.
Die vorbestimmte Ladezeit kann zum einen anhand von Eigenschaften des Kondensators, wie zum Beispiel Kapazität oder Typ des Kondensators, oder zum anderen basierend auf Eigenschaften der nachgeordneten Schaltung, wie zum Beispiel einer Gatespannung, definiert werden. Gatespannungen können zum Beispiel im Bereich von circa 1,8 V für energieoptimierte FETs (Feldeffekttransistor), von etwa 10 V für MOSFETs (Metall-Isolator-Halbleiter-Feldeffekttransistor) oder von etwa 20 V für IGBTs (Bipolartransistor mit isolierter Gate-Elektrode) liegen. Für reine Bipolartransistoren werden Basisströme zur Ansteuerung benötigt, die meist im µA Bereich liegen. Die Ladezeit eines Kondensators berechnet sich aus C x U / I, das heißt der Kapazität des Kondensators mal der Spannung geteilt durch den Strom.
Der für die nachgeordnete Schaltung verwendete oder dimensionierte Kondensator kann anhand der vorbestimmten Ladezeit auf einen Ladestand zwischen 50% und 100%, vorzugsweise zwischen 70% und 90% und besonders bevorzugt zwischen 90% und 100% aufgeladen werden.
Alternativ kann vorgesehen sein, die vorbestimmte Ladezeit über ein Signal, zum Beispiel über das Tastverhältnis des Signals, zu definieren. So kann vorgesehen sein, die Ausschaltzeit des begrenzten Signals als einen Teil oder ein Vielfaches des Taktes, des Tastverhältnisses oder der Impulsdauer des Signals zu definieren.

Vorteilhafterweise kann das Tastverhältnis auf einen Wert zwischen Null und dem Grenzwert oder auf einen Wert von 100% eingestellt werden. So bleibt ein Tastverhältnis von 100 %, bei dem die Endstufe dauerhaft eingeschaltet ist, weiterhin möglich. Durch die Begrenzung kann das Tastverhältnis jedoch keine Werte mehr zwischen dem Grenzwert und 100 % annehmen.

Das Tastverhältnis jeder n-ten Periode des Signals kann begrenzt werden. Wie beschrieben, wird der Kondensator nachgeladen, während die nachgeordnete Schaltung beziehungsweise die Endstufe ausgeschaltet ist. Die endliche Flankensteilheit beim Ein- und Ausschalten verkürzt jedoch die Ladezeit. Die Effizienz des Verfahrens kann nun erhöht werden, wenn nur in jeder n-ten Periode statt in jeder Periode das Tastverhältnis begrenzt wird. Vorteilhafterweise wird die Ausschaltzeit entsprechend verlängert, sodass das effektive Tastverhältnis, gemittelt über n Perioden, gleich bleibt. Damit verlängert sich die verfügbare Nachladezeit des Kondensators, gemittelt über n Perioden, bei n größer 1 gegenüber der Nachladezeit bei n gleich 1 bei gleicher effektiver Tastverhältnisbegrenzung.

Mit Vorteil kann n gleich 3 gewählt werden. Dieser Wert hat sich in der Praxis als vorteilhaft erwiesen. Auch haben sich Werte von 2 bis 5, insbesondere von 3 bis 5, beziehungsweise bis kleiner gleich 10 als vorteilhaft gezeigt.

Der Grenzwert kann berechnet werden als $(n \times T - t_{aus})/(n \times T)$, wobei T die Periodendauer des Signals und $t_{aus}$ die ausgeschaltete beziehungsweise auszuschaltende Zeit der nachgeordneten Schaltung ist. Dies ist eine einfach und schnell auszuführende Berechnung, die unter anderem auf der gewünschten Ausschaltzeit des Signals beziehungsweise der auszuschaltenden Zeit der nachgeordneten Schaltung basiert.

Vorteilhafterweise wird das Tastverhältnis begrenzt, wenn das durchschnittliche Tastverhältnis über n Perioden größer als der Grenzwert ist. Anstatt das Tastverhältnis zu einer bestimmten Periode fix zu begrenzen, beispielsweise für n gleich 3 zu jeder dritten Periode, kann vorteilhafterweise vorgesehen sein, das Tastverhältnis nur dann zu begrenzen, wenn das durchschnittliche Tastverhältnis über eine gewisse Anzahl von Perioden größer ist als der Grenzwert. Diese gezielte Aktivierung der Tastverhältnisbegrenzung erlaubt eine effiziente Durchführung des Verfahrens.

Das Tastverhältnis kann in der n-ten Periode begrenzt werden, wenn das durchschnittliche Tastverhältnis der ersten bis (n-1)-ten Periode größer als der Grenzwert ist. Wenn die erste bis (n - 1)-te Periode ein Tastverhältnis größer als der Grenzwert aufweist, so kann angenommen werden, dass auch die n-te Periode mit einer gewissen Wahrscheinlichkeit ein größeres Tastverhältnis haben wird. Dies führt dazu, dass das gemittelte Tastverhältnis größer als die angestrebte Tastverhältnisbegrenzung sein wird. Mit diesem Kriterium kann die Begrenzung des Tastverhältnisses bereits direkt in der n-ten Periode aktiviert werden. Dies hat den Vorteil einer schnellen Reaktion.

Gemäß einem weiteren Aspekt der Erfindung ist eine Schaltung gemäß Anspruch 8 eingerichtet zur Tastverhältnisbegrenzung eines von einem Schaltregler generierten Signals zur Ansteuerung einer Endstufe darauf gerichtet, dass ein Tastverhältnisbegrenzer zur Übertragung des Signals an den Tastverhältnisbegrenzer mit dem Schaltregler in Verbindung steht, der Tastverhältnisbegrenzer eingerichtet ist, aus dem Signal ein im Tastverhältnis nach oben limitiertes begrenztes Signal zu generieren, und der Tastverhältnisbegrenzer mit der Endstufe zur Übertragung des begrenzten Signals an die Endstufe in Verbindung steht. Gemäß der Erfindung wird das vom Regler generierte Signal zur Ansteuerung der Endstufe, wie ein PWM (pulsweitenmoduliertes) Signal oder Rechtecksignal, nicht direkt zur Ansteuerung der Endstufe verwendet, sondern wird zunächst in einem Tastverhältnisbegrenzer bearbeitet, oder anders ausgedrückt, es wird ein neues Signal generiert, was dann zur Ansteuerung der Endstufe verwendet wird. Diese einfache Struktur erlaubt eine Integration auch in bereits bestehende Systeme sowie eine leichte Planung neuer Systeme. Weiterhin ist die Ausschaltzeit des begrenzten Signals derart bemessen, dass eine vorbestimmte Ladezeit für einen Kondensator der Endstufe zur Verfügung gestellt ist. Die Erzeugung des begrenzten Signals, insbesondere des nicht aktiven Signalteils der Ausschaltzeit, ist darauf optimiert, einen Kondensator zu laden, beziehungsweise einen definierten Ladestand zu halten, wenn die Endstufe ausgeschaltet ist.

Gemäß einem noch weiteren Aspekt der Erfindung umfasst ein Kraftfahrzeug eine vorgenannte Schaltung, wobei der Schaltregler mit einem Bordnetz des Kraftfahrzeugs verbunden ist. Für die besonderen Anforderungen im Kraftfahrzeugbereich ist die erfindungsgemäße Schaltung besonders geeignet. Im Übrigen gelten die zuvor beschriebenen Vorteile und Modifikationen. Vorteilhafte Weiterbildungen der Erfindung sind in den Unteransprüchen angegeben und in der Beschreibung beschrieben.

Zeichnungen

Ausführungsbeispiele der Erfindung werden anhand der Zeichnungen und der nachfolgenden Beschreibung näher erläutert. Es zeigen:

Figur 1     ein Blockschaltbild der Tastverhältnisbegrenzung,

Figur 2     ein Diagramm der Wirkungsweise der Tastverhältnisbegrenzung,

Figur 3    ein Schaltbild der Schaltung zur Tastverhältnisbegrenzung und

Figur 4    beispielhafte Signalverläufe der Schaltung aus Figur 3.

Ausführungsformen der Erfindung

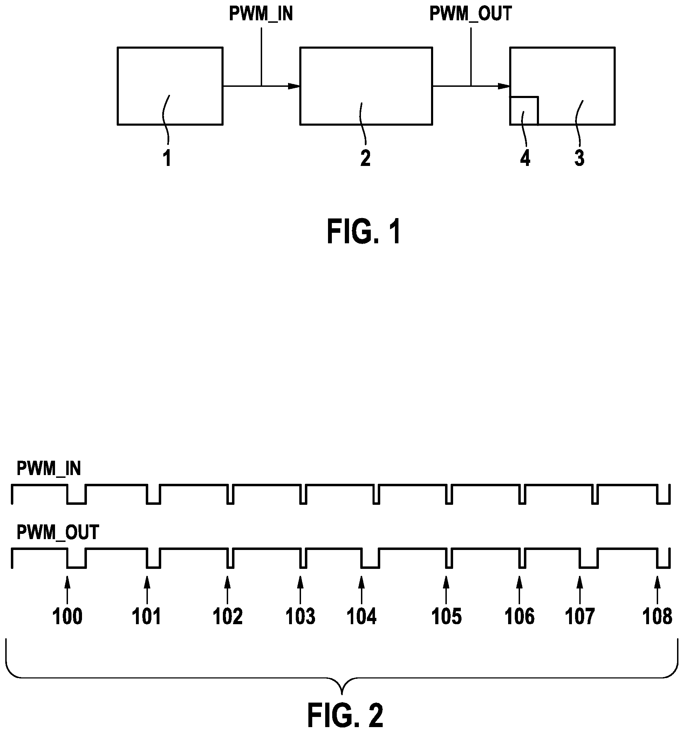

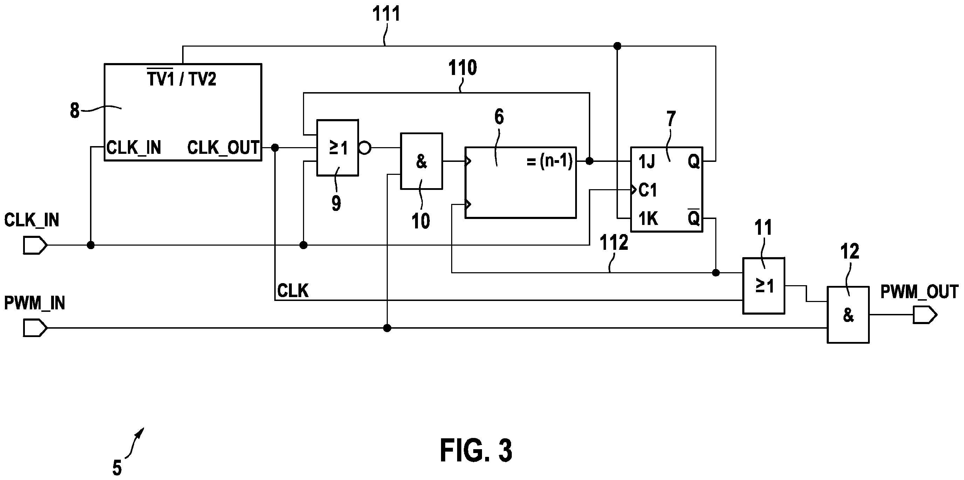

In der Figur 1 ist eine Tastverhältnisbegrenzung gemäß der Erfindung gezeigt, bei der ein Schaltregler 1, der zum Beispiel als Abwärtswandler betrieben wird, mit einem Tastverhältnisbegrenzer 2, der eine in Figur 3 gezeigte Schaltung zur Tastverhältnisbegrenzung enthält, verbunden ist. Der Schaltregler 1 gibt ein Signal, hier ein pulsweitenmoduliertes Signal, PWM_IN an den Tastverhältnisbegrenzer 2 aus. Der Tastverhältnisbegrenzer 2 ist mit einer Endstufe 3, zum Beispiel des Schaltreglers, verbunden und gibt ein Signal, hier ein pulsweitenmoduliertes Signal PWM_OUT, an die Endstufe 3 aus. In der Endstufe 3 ist ein Kondensator 4, zum Beispiel in Form eines Boost-Kondensators, enthalten. Die Ladung des Boost-Kondensators kann dazu verwendet werden, die Endstufe einzuschalten beziehungsweise eine Gate-Spannung der Endstufe 3 zu halten. Die Endstufe 3 ist hier beispielhaft für eine nachgeordnete Schaltung dargestellt.

Der Kondensator 4 kann, wie dargestellt, in der Endstufe 3 oder im Schaltregler 1 enthalten sein oder kann separat von der Endstufe 3 beziehungsweise dem Schaltregler 1 angeordnet sein. Die Endstufe 3 und/oder der Tastverhältnisbegrenzer 2 können Bestandteil des Schaltreglers 1 sein.

Der Kondensator 4 wird geladen, während die Endstufe 3 ausgeschaltet ist. Die Ladezeit oder Nachladezeit $t_{ld}$ des Kondensators 4 wird durch die endliche Flankensteilheit trf beim Ein- und Ausschalten der Endstufe 3 verkürzt.

Somit berechnet sich die Nachladezeit $t_{ld}$ zu

$$(1) \qquad t_{ld} = t_{aus} - 2 \times t_{rf}$$

Nun wird nur das Tastverhältnis jeder n-ten Periode begrenzt, die Ausschaltzeit $t_{aus}$ der Endstufe 3 dafür aber entsprechend verlängert. Somit bleibt das effektive Tastverhältnis, über n Perioden gemittelt, gleich.

Ein oberer Grenzwert für die Tastverhältnisbegrenzung beziehungsweise eine effektive Tastverhältnisbegrenzung TVB berechnet sich zu

$$(2) \qquad TVB = (n \times T - t_{aus}) / (n \times T).$$

Damit verlängert sich die Nachladezeit des Kondensators, betrachtet über n Perioden, bei n größer 1 gegenüber der Nachladezeit bei n gleich 1 bei gleicher effektiver Tastverhältnisbegrenzung TVB. Benötigt die Endstufe 3 beispielsweise $t_{rf}$ = 20 ns zum Umschalten bei einem Schaltreglertakt von 1 MHz, was einer Periodendauer t = 1 μs entspricht, so ergibt sich bei einem Grenzwert TVB = 95 %, bei n = 1 beziehungsweise n = 3 jeweils eine Ausschaltzeit von

$$(3) \qquad t_{aus,n=1} = n \times T \times (1 - TVB) = 1 \times 1μs \times (1 - 0.95) = 50ns$$

$$(4) \qquad t_{aus,n=3} = 3 \times 1μs \times (1 - 0.95) = 150ns$$

Mit entsprechenden Ladezeiten von

$$(5) \qquad t_{ld,n=1} = t_{aus,n=1} - 2 \times t_{rf} = 50ns - 2 \times 20ns = 10ns$$

$$(6) \qquad t_{ld,n=3} = t_{aus,n=3} - 2 \times t_{rf} = 150ns - 2 \times 20ns = 110ns$$

Aus dieser Berechnung ist erkennbar, dass bei gleicher effektiver Tastverhältnisbegrenzung pro Periode aufgrund der längeren Ladedauer mehr Ladung zum Einschalten der Endstufe 3 zur Verfügung steht, je größer n ist. In der Praxis hat sich n = 3 als guter Wert erwiesen.

Als Schaltregler-Endstufe kann ein externer Transistor verwendet werden, das heißt, der Transistor ist nicht in dem ASIC (Anwendungsspezifische integrierte Schaltung, englisch Application-Specific Integrated Circuit) integriert sondern als diskretes Bauelement vorgesehen. Dann verstärkt sich das Problem der Ladehaltung des Kondensators 4, da die Flankensteilheit des externen Transistors nicht in dem Maße kontrollierbar beziehungsweise spezifizierbar ist wie bei einer internen Schaltreglerendstufe. Dies hat zur Folge, dass bei einem externen Transistor und n = 1 eine zu große Nachladezeit für den Kondensator 4 vorgehalten werden müsste. Die sich daraus ergebende Tastverhältnisbegrenzung TVB würde eine zu große Unstetigkeit in der Einstellbarkeit des Tastverhältnisses für den Regelkreis bedeuten, was sich wiederum als ungewollter Ripple beziehungsweise als ungewolltes Schwingen der Ausgangsspannung bemerkbar machen könnte.

Deshalb kann vorgesehen sein, die Tastverhältnisbegrenzung nur auf jede n-te Periode anzuwenden. In dem Beispiel (TVB = 95 %, T = 1 μs und n = 3) würde also jede dritte Periode auf ein Tastverhältnis von 85 % begrenzt werden, während jede erste und zweite Periode nicht begrenzt wird.

In Figur 2 sind beispielhafte Verläufe des PWM-Signals PWM_IN, das heißt des ursprünglichen PWM-Signals vom Regler 1, und des Signals PWM_OUT, also des PWM-Signals mit begrenztem Tastverhältnis, dargestellt. In den ersten beiden Perioden 100 und 101 ist das Tastverhältnis TV kleiner als der Grenzwert beziehungsweise die effektive Tastverhältnisbegrenzung TVB. Für die ersten beiden Perioden sind deshalb die beiden Signale PWM_IN und PWM_OUT identisch, da die Tastverhältnisbegrenzung nicht aktiviert ist. Die Perioden sind hier an der Ausschaltzeit der Periode gekennzeichnet, eine Periode erstreckt sich von einer steigenden bis zur nächsten steigenden Flanke.

In der dritten Periode 102 und der vierten Periode 103 ist für eine erste und zweite Periode das Tastverhältnis TV größer als der obere Grenzwert TVB. Auch hier wird jedoch nicht begrenzt, da die Anzahl der Perioden, deren Tastverhältnis größer als der Grenzwert TVB, noch kleiner als n, nämlich gleich 2 ist. Erst in der nächsten Periode 104 greift die Tastverhältnisbegrenzung. Dies ist erkennbar durch die sich nun unterscheidenden Signale PWM_IN und PWM_OUT.

Diese Periode 104 ist auf ein Tastverhältnis von 85 % begrenzt, um bei maximalen Tastverhältnissen von jeweils 100 % in den beiden davorliegenden Perioden 102, 103 ein über diese drei Perioden gemitteltes Tastverhältnis von kleiner gleich 95 % zu erzielen. Das effektive Tastverhältnis muss nicht genau 95 % betragen, weil die beiden davorliegenden Perioden ein Tastverhältnis von kleiner 100 % haben könnten, was in die Mittelwertbildung einfließt. Die nächsten drei Perioden 105, 106 und 107 entsprechen den Perioden 102, 103 und 104, sodass die Signalverläufe identisch sind. In der Periode 108 wiederum ist das Tastverhältnis TV kleiner als der Grenzwert beziehungsweise die effektive Tastverhältnisbegrenzung TVB.

Es kann vorgesehen sein, die exakten Tastverhältnisse der beiden vorherliegenden oder auch aller Perioden zu messen, um so das Tastverhältnis der zu begrenzenden Periode exakt einzustellen, sodass sich ein effektives Tastverhältnis von 95 % beziehungsweise von einem anderen gewählten Grenzwert ergibt.

Für die Entscheidung, wann die Tastverhältnisbegrenzung aktiviert wird, wird das vom Regler 1 erzeugte ursprüngliche PWM-Signal PWM_IN überwacht. Erst wenn das über n Perioden gemittelte Tastverhältnis TV des ursprünglichen PWM-Signals PWM_IN größer ist als die angestrebte Tastverhältnisbegrenzung TVB beziehungsweise der Grenzwert TVB, wird das Tastverhältnis TV der jeweils n-ten Periode begrenzt. In diesem Beispiel wird also jede dritte Periode nur dann auf ein Tastverhältnis 85 % begrenzt, wenn es zuvor Perioden gab, deren Tastverhältnis so groß gewesen ist, dass das über drei Perioden gemittelte Tastverhältnis TV des ursprünglichen PWM-Signals PWM_IN größer ist als die angestrebte Tastverhältnisbegrenzung von 95 %. Die dritte Periode muss demnach nicht die dritte Periode einer Reihenfolge sein, sondern kann die dritte Periode mit zu großem Tastverhältnis sein.

In der Praxis hat sich die Annahme bewährt, dass, wenn die erste bis (n -1)-te Periode ein Tastverhältnis von TV größer TVB haben, dann auch die n-te Periode mit einer gewissen Wahrscheinlichkeit ein Tastverhältnis von TV größer TVB haben wird. Daraus folgt, dass das gemittelte Tastverhältnis größer sein wird als die angestrebte Tastverhältnisbegrenzung. In diesem Beispiel (TVB = 95 %, T = 1 μs und n = 3) würde die Tastverhältnisbegrenzung also in der dritten Periode aktiviert werden, wenn sowohl die erste als auch die zweite Periode jeweils ein Tastverhältnis von TV größer 95 % haben.

Entsprechend wird eine Schaltung mit einem Zähler realisiert, der hochgezählt wird, wenn das Tastverhältnis TV einer Periode größer ist als die angestrebte Tastverhältnisbegrenzung beziehungsweise der obere Grenzwert TVB. Hat der Zähler einen Stand von n - 1 erreicht, wird die n-te Periode in ihrem Tastverhältnis auf $(T - t_{aus}) / T$ begrenzt. Es kann vorteilhaft sein, den Zähler nicht zurückzusetzen, wenn es zwischendurch Perioden mit einem Tastverhältnis von TV kleiner TVB gibt. Das bedeutet, dass die Tastverhältnisbegrenzung auch dann für eine Periode aktiviert wird, wenn zuvor zwei beliebige Perioden und nicht nur die unmittelbar zurückliegenden beiden Perioden jeweils ein Tastverhältnis von TV größer TVB, hier 95 %, haben.

Als Vorbereitung für die in Figur 3 gezeigte Schaltungsrealisierung werden die folgenden Vorbetrachtungen angestellt. Für die Bewertung, ob das vom Regler 1 erzeugte PWM-Signal PWM_IN die angestrebte Tastverhältnisbegrenzung TVB überschreitet, wird ein Taktsignal $CLK_1$ mit einem Tastverhältnis von $TV_1 = TVB$ verwendet, mit dem das vom Regler 1 erzeugte PWM-Signal verglichen wird.

Zur Realisierung der oben beschriebenen effektiven Tastverhältnisbegrenzung TVB wird zusätzlich ein Taktsignal $CLK_2$ mit einem Tastverhältnis $TV_2$ verwendet, das sich aus der Ausschaltzeit $t_{aus}$ der Endstufe 3 wie folgt berechnen lässt:

$$(7) \qquad TV_2 = (T - t_{aus}) / T$$

In dem Beispiel (TVB = 95 %, T = 1μs und n = 3) ist eine Ausschaltzeit von

$$(8) \qquad t_{aus} = n \times T \times (1 - TVB) = 3 \times 1\mu s \times (1 - 0.95) = 150ns$$

und damit ein Taktsignal mit einem Tastverhältnis von

$$(9) \qquad TV_2 = (1\mu s - 150ns) / 1\mu s = 85\%$$

vorgesehen. Vorteilhafterweise werden mögliche Toleranzen der Tastverhältnisse $TV_1$ und $TV_2$ bei der Dimensionierung berücksichtigt, um eine zu große Unstetigkeit in der Einstellbarkeit der Tastverhältnisse für den Regelkreis zu vermeiden. Denn eine zu große Unstetigkeit kann sich als ungewollter Ripple beziehungsweise als ungewolltes Schwingen der Ausgangsspannung bemerkbar machen.

Da die beiden Taktsignale $CLK_1$ und $CLK_2$ nicht gleichzeitig verwendet werden, kann ein gemeinsames Taktsignal CLK verwendet werden, dessen Tastverhältnis zwischen $TV_1$ und $TV_2$ umgeschaltet werden kann.

Anhand von Figur 3 wird nun beispielhaft die Schaltung 5 zur Tastverhältnisbegrenzung bei einem Schaltregler erläutert. Die Schaltung 5 kann in dem Tastverhältnisbegrenzer 2 aus Figur 1 enthalten sein. Zentrale Bestandteile der Schaltung 5 sind ein Zähler 6, ein JK-Flipflop 7 sowie ein Taktgenerator 8. Weiterhin enthält die Schaltung mehrere Logikelemente, die im weiteren Verlauf näher erläutert werden. Eingänge der Schaltung sind das von dem Regler 1 stammende PWM-Signal PWM_IN sowie das Taktsignal CLK_IN, der Ausgang der Schaltung 5 ist das begrenzte PWM-Signal PWM_OUT, das von dem Tastverhältnisbegrenzer 2 an die Endstufe 3 ausgegeben wird.

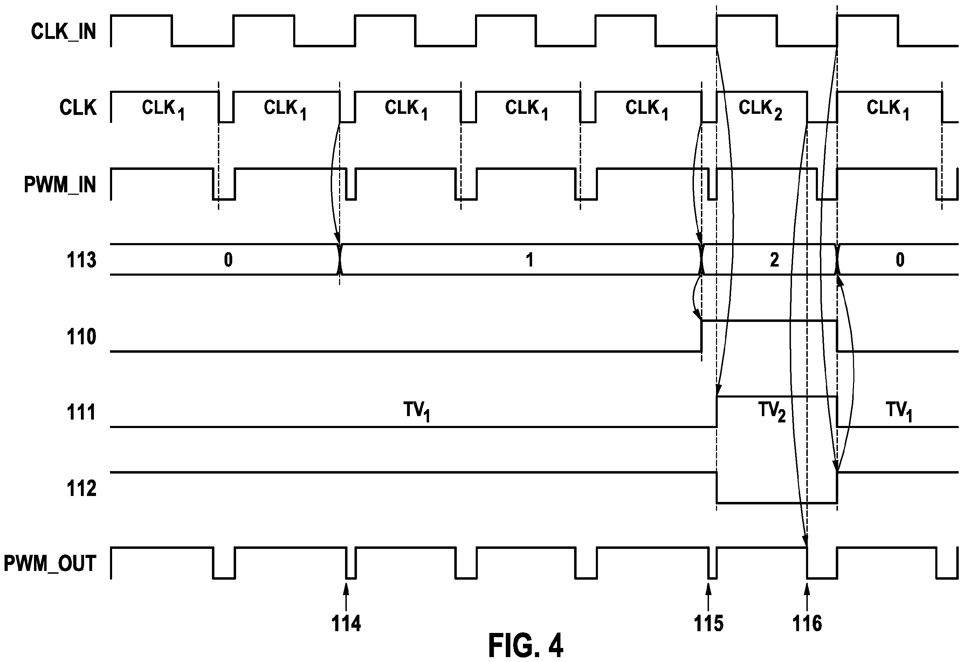

Beispielhafte Signalverläufe zu der Schaltung 5 sind in Figur 4 dargestellt und werden gemeinsam mit der Diskussion von Figur 3 erläutert. Die Signalverläufe beziehungsweise die Signale können andere Formen oder Verhältnisse aufweisen, zum Beispiel trapezförmige Signalformen.

Der Zähler 6 und das JK-Flipflop 7 sind zu Beginn dieser Betrachtung auf Null gesetzt beziehungsweise gelöscht. Dies führt dazu, dass das Signal 110, das auch als EQN bezeichnet werden kann, das am Ausgang =(n-1) des Zählers 6 anliegt, gleich 0 ist. Der Ausgang des Zählers 6 ist mit dem J-Eingang des JK-Flipflops 7 verbunden. Der Clockeingang C1 des JK-Flipflops 7 ist mit dem Takteingang CLK_IN der Schaltung 5 verbunden. Aufgrund der Null-Setzung beziehungsweise Löschung ist auch das Signal 111 am Q-Ausgang des JK-Flipflops 7 gleich Null. Das Signal 111 kann auch als TV_SEL bezeichnet werden, da mit diesem Signal zwischen den Tastverhältnissen TV1 und TV 2 umgeschaltet wird. Das Signal 111 wird an den K-Eingang des JK-Flipflops 7 zurückgekoppelt. Der Ausgang $\overline{Q}$ des JK-Flipflops 7, an dem das Signal 112 oder RST_CNT ausgegeben wird, ist mit dem Reset-Eingang R des Zählers 6 verbunden und dient zur Zurücksetzung des Zählers 6.

Das Signal 111, mit dem die Umschaltung zwischen dem Tastverhältnis TV1 und TV2 erfolgt, ist mit dem Taktgenerator 8 verbunden. An einem Clockeingang CLK_IN des Taktgenerators 8 liegt der Eingangstakt CLK_IN an. Aus dem Taktsignal CLK_IN wird wegen 111 = 0 das Taktsignal CLK = CLK1 von dem Taktgenerator 8 generiert und an dessen Ausgang CLK_OUT zur Verfügung gestellt. Das Taktsignal CLK1 hat ein Tastverhältnis TV1.

Der Taktausgang des Taktgenerators 8, der Ausgang des Zählers 6 sowie der Takteingang CLK_IN sind mit einem NOR-Gatter 9 verbunden. Das NOR-Gatter 9 gibt ein Signal an ein UND-Gatter 10 aus, wenn alle drei Eingänge einen Signalpegel von 0 haben. Der zweite Eingang des UND-Gatters 10 ist mit dem Eingangssignal PWM_IN verbunden. Der Ausgang des UND-Gatters 10 ist mit dem Inkrementeingang I des Zählers 6 verbunden.

Ist somit das ursprüngliche PWM-Signal PWM_IN während der fallenden Flanke von CLK noch gesetzt (PWM_IN = 1), so ist das Tastverhältnis TV der aktuellen Periode 114 des PWM-Signals PWM_IN größer als die angestrebte Tastverhältnisbegrenzung TVB. Der Zählerstand 113, auch als Counter bezeichnet, des Zählers 6 wird in diesem Fall mit der fallenden Flanke von CLK um 1 inkrementiert, sofern er vor dem Inkrement kleiner als n - 1 ist. Die Perioden sind hier an der Ausschaltzeit der Periode gekennzeichnet, eine Periode erstreckt sich von einer steigenden bis zur nächsten steigenden Flanke.

Hat der Zähler 6 gegebenenfalls nach wiederholtem Zählen den Stand des Zählers n - 1 erreicht, wird in Periode 115 das Ausgangssignal 110 des Zählers 6 gleich 1 gesetzt. Anschließend wird das JK-Flipflop 7 mit der steigenden Flanke von CLK gesetzt, sodass an dem Ausgang Q des JK-Flipflops 7 das Signal 111 = 1 gesetzt wird. Somit erzeugt der Taktgenerator 8 aus dem Taktsignal CLK_IN in der aktuellen Periode das Taktsignal CLK = CLK2 mit dem Tastverhältnis TV = TV2.

Weil das JK-Flipflop 7 gesetzt ist, ist das an dem $\overline{Q}$-Ausgang ausgegebene Signal RST_CNT = 0, was dazu führt, dass das ODER-Gatter 11 das Taktsignal CLK = CLK zu einem UND-Gatter 12 passieren lässt. In dem UND-Gatter 12 wird das Taktsignal CLK = CLK2 mit dem ursprünglichen PWM-Signal PWM_IN verknüpft und erscheint so in Periode 116 mit der fallenden Flanke von CLK als begrenztes PWM-Signal PWM_OUT am Ausgang PWM_OUT der Schaltung 5.

Mit der nächsten steigenden Flanke des Taktsignals CLK wird das JK-Flipflop 7 wieder zurückgesetzt, weil die Eingänge J und K gleich 1 sind. Dies führt dazu, dass die beiden Ausgangssignale 111 = 0 und 112 = 1 gesetzt werden. Mit der steigenden Flanke von 112 wird auch der Zähler 6 wieder auf Null gesetzt. Somit befindet sich die Schaltung 5 wieder in dem Zustand, den sie zu Beginn der Betrachtung hatte.

**Patentansprüche**

1.  Verfahren zum Betrieb eines Schaltreglers (1) mit einer nachgeordneten Schaltung (3), die von einem Signal (PWM_IN) des Schaltreglers (1) angesteuert wird, und einem Kondensator (4), der bei ausgeschalteter nachgeordneter Schaltung (3) geladen wird, **dadurch gekennzeichnet, dass** der Schaltregler (1) mit einem Tastverhältnisbegrenzer (2) verbunden ist und durch den Tastverhältnisbegrenzer (2) aus dem Signal (PWM_IN) bei einem oberen Grenzwert (TVB) ein in seinem Tastverhältnis nach oben limitiertes begrenztes Signal (PWM_OUT) generiert wird, so dass eine vorbestimmte Ladezeit für den Kondensator (4) zur Verfügung steht und die Ladung des Kondensators (4) zur Einschaltung beziehungsweise zur Haltung der Gate-Spannung der als Endstufe ausgebildeten und mit dem Tastverhältnisbegrenzer (2) zur Übertragung des begrenzten Signals (PWM_OUT) verbundenen nachgeordneten Schaltung (3) verwendet wird.

2.  Verfahren nach Anspruch 1, wobei das Tastverhältnis auf einen Wert zwischen Null und dem Grenzwert (TVB) oder von 100% eingestellt wird.

3.  Verfahren nach Anspruch 1 oder 2, wobei das Tastverhältnis jeder n-ten Periode des Signals begrenzt wird.

4.  Verfahren nach Anspruch 3, wobei $2 \leq n \leq 5$, bevorzugt n gleich 3 gewählt wird.

5.  Verfahren nach einem der Ansprüche 1 bis 4, wobei der Grenzwert (TVB) berechnet wird als $(n \times T - t_{aus})/(n \times T)$, wobei T die Periodendauer des Signals und $t_{aus}$ die ausgeschaltete Zeit der nachgeordneten Schaltung ist.

6.  Verfahren nach einem der Ansprüche 1 bis 5, wobei das Tastverhältnis begrenzt wird, wenn das durchschnittliche Tastverhältnis über n Perioden größer als der Grenzwert (TVB) ist.

7.  Verfahren nach einem der Ansprüche 1 bis 5, wobei das Tastverhältnis in der n-ten Periode begrenzt wird, wenn das durchschnittliche Tastverhältnis der ersten bis (n-1)-ten Periode größer als der Grenzwert (TVB) ist.

8.  Schaltung eingerichtet zur Tastverhältnisbegrenzung eines von einem Schaltregler (1) generierten Signals zur Ansteuerung einer Endstufe (3), **dadurch gekennzeichnet, dass** die Schaltung einen Tastverhältnisbegrenzer (2) umfasst, der zur Übertragung des Signals (PWM_IN) an den Tastverhältnisbegrenzer (2) mit dem Schaltregler (1) verbindbar ist, der Tastverhältnisbegrenzer (2) eingerichtet ist, aus dem Signal (PWM_IN) ein im Tastverhältnis nach oben limitiertes begrenztes Signal (PWM_OUT) zu generieren, und der Tastverhältnisbegrenzer (2) mit der Endstufe (3) zur Übertragung des begrenzten Signals (PWM_OUT) an die Endstufe (3) verbindbar ist, wobei die Ausschaltzeit des begrenzten Signals (PWM_OUT) derart bemessen ist, dass eine vorbestimmte Ladezeit für einen Kondensator (4) der Endstufe (3) zur Verfügung gestellt ist und die Ladung des Kondensators (4) dazu vorgesehen ist, die Endstufe (3) einzuschalten beziehungsweise eine Gate-Spannung der Endstufe (3) zu halten.

9.  Kraftfahrzeug mit einer Schaltung (5) nach Anspruch 8, **dadurch gekennzeichnet, dass** der Schaltregler (1) mit einem Bordnetz des Kraftfahrzeugs verbunden ist.

**Claims**

1.  Method for operating a switching regulator (1) with a downstream circuit (3), which is controlled by a signal (PWM_IN) from the switching regulator (1), and a capacitor (4) which is charged when the downstream circuit (3) is switched off, **characterized in that** the switching regulator (1) is connected to a duty ratio limiter (2), and, at an upper limit value (TVB), the duty ratio limiter (2) uses the signal (PWM_IN) to generate a limited signal (PWM_OUT) which has an upper limit in terms of its duty ratio, with the result that a predetermined charging time is available for the capacitor (4) and the charge of the capacitor (4) is used to switch on or hold the gate voltage of the downstream circuit (3) which is in the form of an output stage and is connected to the duty ratio limiter (2) for the purpose of transmitting the limited signal (PWM_OUT).

2. Method according to Claim 1, wherein the duty ratio is set to a value of between zero and the limit value (TVB) or to a value of 100%.

3. Method according to Claim 1 or 2, wherein the duty ratio of every nth period of the signal is limited.

4. Method according to Claim 3, wherein $2 \leq n \leq 5$, preferably n equal to 3, is selected.

5. Method according to one of Claims 1 to 4, wherein the limit value (TVB) is calculated as $(n \times T - t_{aus}) / (n \times T)$, wherein T is the period duration of the signal and $t_{aus}$ is the switched-off time of the downstream circuit.

6. Method according to one of Claims 1 to 5, wherein the duty ratio is limited if the average duty ratio is greater than the limit value (TVB) over n periods.

7. Method according to one of Claims 1 to 5, wherein the duty ratio is limited in the nth period if the average duty ratio of the first to (n-1)th periods is greater than the limit value (TVB).

8. Circuit configured to limit the duty ratio of a signal which is generated by a switching regulator (1) and is intended to control an output stage (3), **characterized in that** the circuit comprises a duty ratio limiter (2) which can be connected to the switching regulator (1) for the purpose of transmitting the signal (PWM_IN) to the duty ratio limiter (2), the duty ratio limiter (2) is configured to use the signal (PWM_IN) to generate a limited signal (PWM_OUT) which has an upper limit in terms of the duty ratio, and the duty ratio limiter (2) can be connected to the output stage (3) for the purpose of transmitting the limited signal (PWM_OUT) to the output stage (3), wherein the switched-off time of the limited signal (PWM_OUT) is such that a predetermined charging time is provided for a capacitor (4) of the output stage (3) and the charge of the capacitor (4) is intended to switch on the output stage (3) or to hold a gate voltage of the output stage (3).

9. Motor vehicle having a circuit (5) according to Claim 8, **characterized in that** the switching regulator (1) is connected to a vehicle electrical system of the motor vehicle.

**Revendications**

1. Procédé permettant de faire fonctionner un régulateur à découpage (1), comprenant un circuit (3) monté en aval qui est piloté par un signal (PWM_IN) du régulateur à découpage (1), et un condensateur (4) qui est chargé lorsque le circuit (3) monté en aval est hors tension, **caractérisé en ce que** le régulateur à découpage (1) est relié à un limiteur de taux d'impulsions (2) et **en ce qu'**un signal (PWM_OUT) limité vers le haut au niveau de son taux d'impulsions est généré au moyen du limiteur de taux d'impulsions (2) à partir du signal (PWM_IN) à une valeur limite supérieure (TVB) de sorte qu'une durée de charge prédéterminée est disponible pour le condensateur (4) et la charge du condensateur (4) est utilisée pour mettre sous tension ou pour maintenir la tension de grille du circuit (3) monté en aval réalisé sous la forme d'un étage de sortie et relié au limiteur de taux d'impulsions (2) pour transmettre le signal limité (PWM_OUT).

2. Procédé selon la revendication 1, dans lequel le taux d'impulsions est réglé sur une valeur entre zéro et la valeur limite (TVB) ou de 100 %.

3. Procédé selon la revendication 1 ou 2, dans lequel le taux d'impulsions de toutes les n périodes du signal est limité.

4. Procédé selon la revendication 3, dans lequel $2 \leq n \leq 5$, de préférence n égal 3, est sélectionné.

5. Procédé selon l'une quelconque des revendications 1 à 4, dans lequel la valeur limite (TVB) est calculée par $(n \times T - taus) / (n \times T)$, où T est la durée de période du signal, et $t_{aus}$ est le temps hors tension du circuit monté en aval.

6. Procédé selon l'une quelconque des revendications 1 à 5, dans lequel le taux d'impulsions est limité si le taux d'impulsions moyen sur n périodes est supérieur à la valeur limite (TVB).

**7.** Procédé selon l'une quelconque des revendications 1 à 5, dans lequel le taux d'impulsions est limité dans la nième période si le taux d'impulsions moyen de la première à la (n-1)ième période est supérieur à la valeur limite (TVB).

**8.** Circuit, conçu pour limiter le taux d'impulsions d'un signal généré par un régulateur à découpage (1) afin de piloter un étage de sortie (3), **caractérisé en ce que** le circuit comprend un limiteur de taux d'impulsions (2) qui peut être relié au régulateur à découpage (1) pour transmettre le signal (PWM_IN) au limiteur de taux d'impulsions (2), **en ce que** le limiteur de taux d'impulsions (2) est conçu pour générer à partir du signal (PWM_IN) un signal (PWM_OUT) limité vers le haut au niveau du taux d'impulsions, et **en ce que** le limiteur de taux d'impulsions (2) peut être relié à l'étage de sortie (3) pour transmettre le signal limité (PWM_OUT) à l'étage de sortie (3), dans lequel le temps hors tension du signal limité (PWM_OUT) est dimensionné de telle sorte qu'une durée de charge prédéterminée pour un condensateur (4) est disponible pour l'étage de sortie (3) et la charge du condensateur (4) est prévue pour mettre sous tension ou maintenir une tension de grille de l'étage de sortie (3).

**9.** Véhicule automobile, comprenant un circuit (5) selon la revendication 8, **caractérisé en ce que** le régulateur à découpage (1) est relié à un réseau de bord du véhicule automobile.

PWM_IN                    PWM_OUT

1        2        4   3

# FIG. 1

PWM_IN

PWM_OUT

100   101   102   103   104   105   106   107   108

# FIG. 2

FIG. 3

**FIG. 4**

EP 3 042 445 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5627460 A